# EUROPÄISCHE PATENTSCHRIFT

(11) **EP 2 129 565 B1**
(45) Veröffentlichungstag und Bekanntmachung des Hinweises auf die Patenterteilung: **10.10.2012**
(21) Anmeldenummer: 08734640.9
(22) Anmeldetag: 18.03.2008
(51) Int. Cl.: B60T 17/00, B60T 17/04

(54) **DRUCKLUFTVERSORGUNGSEINRICHTUNG FÜR EIN NUTZFAHRZEUG UND VERFAHREN ZUM BETREIBEN EINER DRUCKLUFTVERSORGUNGSEINRICHTUNG**
COMPRESSED AIR SUPPLY SYSTEM FOR A UTILITY VEHICLE AND METHOD FOR OPERATING SAID COMPRESSED AIR SUPPLY SYSTEM
DISPOSITIF D'ALIMENTATION EN AIR COMPRIMÉ CONÇU POUR UN VÉHICULE UTILITAIRE, ET PROCÉDÉ POUR FAIRE FONCTIONNER UN DISPOSITIF D'ALIMENTATION EN AIR COMPRIMÉ

(30) Priorität: 19.03.2007 DE 102007013673
(43) Veröffentlichungstag der Anmeldung: 09.12.2009
(73) Patentinhaber: KNORR-BREMSE Systeme für Nutzfahrzeuge GmbH, 80809 München (DE)
(72) Erfinder: SCHNITTGER, Karsten, 80935 München (DE); ERTL, Thomas, 80995 München (DE)
(74) Vertreter: Mattusch, Gundula
(86) Internationale Anmeldenummer: PCT/EP2008/002132
(87) Internationale Veröffentlichungsnummer: WO 2008/113552

(56) Entgegenhaltungen:
- EP-B- 1 318 936
- DE-A1- 19 515 895
- DE-B3-102005 057 004

## Beschreibung

Die Erfindung betrifft eine Druckluftversorgungseinrichtung für ein Nutzfahrzeug mit einem mit einem Kompressor koppelbaren Drucklufteingang, einer mit dem Drucklufteingang über eine Förderleitung gekoppelten Filtereinheit, einer mit einem Ablassausgang und der Förderleitung gekoppelten Ablassventileinrichtung, einem mit einem Steuereingang des Kompressors koppelbaren Energiesparsteuerausgang, einer zwischen dem Kompressor und der Filtereinheit angeordneten Förderleitungsabsperrventileinrichtung und einer ersten Ventileinrichtung sowie einer zweiten Ventileinrichtung, wobei durch die Ventileinrichtungen die Ablassventileinrichtung, der Energiesparsteuerausgang, die Regeneration der Filtereinheit und die Förderleitungsabspenventileinrichtung steuerbar sind.

Weiterhin betrifft die Erfindung ein Verfahren zum Betreiben einer Druckluftversorgungseinrichtung mit einem mit einem Kompressor koppelbaren Drucklufteingang, einer mit dem Drucklufteingang über eine Förderleitung gekoppelten Filtereinheit, einer mit einem Ablassausgang und der Förderleitung gekoppelten Ablassventileinrichtung, einem mit einem Steuereingang des Kompressors koppelbaren Energiesparsteuerausgang, einer zwischen dem Kompressor und der Filtereinheit angeordneten Förderieitungsabspenventileinrichtung und einer ersten Ventileinrichtung sowie einer zweiten Ventileinrichtung, wobei im Rahmen des Verfahrens vorgesehen ist, dass durch die Ventileinrichtungen die Ablassventileinrichtung, der Energiesparsteuerausgang, die Regeneration der Filtereinheit und die Förderieitungsabsperrrentileinrichtung gesteuert werden.

Derartige Druckluftversorgungseinrichtungen erfüllen in Nutzfahrzeugen zahlreiche Aufgaben. Hierzu gehören insbesondere die Versorgung der Bremsanlage und weiterer Druckluftverbraucher mit trockener gereinigter Druckluft, die Wahrnehmung einer Mehrkreisschutzventilfunktion zur Absicherung verschiedener Verbraucherkreise gegeneinander und zur Sicherstellung einer bestimmten Füllreihenfolge sowie die Bereitstellung einer Druckreglerfunktion. Die von den Druckluftverbrauchem genutzte Druckluft wird primär durch einen Kompressor zur Verfügung gestellt, der im Allgemeinen durch den Verbrennungsmotor des Nutzfahrzeugs angetrieben wird. Bei zahlreichen Systemen lässt sich der Kompressor in einen energiesparenden Zustand überführen, entweder durch Trennen einer Kupplung, über die der Kompressor mit dem Verbrennungsmotor gekoppelt sein kann, oder durch pneumatische Ansteuerung eines Kompressorsteuereingangs, um den Kompressor in einen Leerlaufzustand zu überführen. Derartige energiesparende Maßnahmen können noch dadurch unterstützt werden, dass die Betriebsabläufe in der Druckluftversorgungseinrichtung möglichst so stattfinden, dass einmal erzeugte Druckluft nicht unnötig verloren geht. Dabei ist zu beachten, dass ein gewisser Druckluftverlust unumgänglich ist, denn die Filtereinheit der Druckluftversorgungseinrichtung muss immer wieder regeneriert werden. Zu diesem Zweck wird trockene Druckluft aus den an die Druckluftversorgungseinrichtung angeschlossenen Druckluftbehältern in einer Richtung durch die Filtereinheit geleitet, die der Förderrichtung entgegengesetzt ist. Die durch die Filtereinheit strömende Luft nimmt die Feuchtigkeit in der Filtereinheit zumindest zum Teil auf, um dann über das Ablassventil der Druckluftversorgungseinrichtung ins Freie zu strömen. Die nachreröffentlichte DE 10 2005 057 004 B3 und deren Nachannelchung EP 1957 335B1 beschreiben eine Druchluft aufkereitungseinrichtung.

Bei bestimmten Systemen des Standes der Technik ist vorgesehen, den Energie-sparbetriebszustand an das Öffnen des Ablassventils zu koppeln, das heißt immer dann, wenn der Kompressor in einen energiesparenden Zustand überführt wird, wird auch das Ablassventil geöffnet, so dass es hierdurch zu einem unnötigen Druckverlust in der gesamten Förderleitung vor einem den Verbrauchern zugewandten Rückschlagventil, das stromabwärts der Filtereinheit angeordnet ist, kommt.

Die EP 1 318 936 B1 beschreibt eine Druckluftversorgungseinrichtung, die mit einer Regenerationsfunktion und einem Energiesparausgang zum Überführen eines Kompressors in einen Leerlaufzustand ausgestattet ist. Es sind zwei Magnetventile vorgesehen, die diese Funktionen realisieren. Dabei ist vorgesehen, dass das Öffnen des Regenerationsluftpfades mit dem Öffnen des Ablassventils gekoppelt ist. Auf diese Weise geht die Druckluft aus dem Volumen zwischen dem Ablassventil und einem stromabwärts von der Filtereinheit angeordneten, den Verbrauchern zugewandten Rückschlagventil nur dann verloren, wenn dies aufgrund der geforderten Regeneration unumgänglich ist. Allerdings werden keine Vorkehrungen getroffen, um die Druckluft in einer Förderleitung zwischen dem Kompressor und der Druckluftversorgungseinrichtung während der Regenerationsphasen zu konservieren. Gelänge dies in schaltungstechnisch eleganter Weise, so stünde damit eine zusätzliche Einsparmöglichkeit für Druckluft und damit für Energie zur Verfügung.

Der Erfindung liegt die Aufgabe zugrunde, eine Druckluftversorgungseinrichtung und ein Betriebsverfahren mit hohem Energiesparpotential und einer Steigerung ihrer Funktionalität gegenüber dem Stand der Technik zur Verfügung zu stellen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass durch die erste Ventileinrichtung der Energiesparsteuerausgang und durch die zweite Ventileinrichtung die Ablassventileinrichtung und die Regeneration der Filtereinheit steuerbar sind , wobei der Energiesparstenerausgang (28) ausschlieslich mittels der ersten Vantileinrichlung (16) unit dem Ablass- ausgang (24) verbindbar ist, und dass die Förderleitungsabsperrventileinrichtung während der Regenerationsphase der Filtereinheit geschlossen ist und außerhalb der Regenrationsphase bei geschlossener Ablassventileinrichtung und belüftetem Energiesparsteuerausgang in einen geöffneten Schaltzustand überführbar ist. Das Absperren der Leitung zwischen dem Kompressor und der Filtereinheit durch die Förderleitungsabsperrventileinrichtung während der Regenerationsphase bewirkt, dass das Druckluftvolumen zwischen dem Kompressor und der Förderleitungsabsperrventileinrichtung während der Regeneration nicht vertoren geht. In die Atmosphäre wird also im Wesentlichen nur die Druckluft entlassen, die tatsächlich für die Regeneration erforderlich ist und zu diesem Zweck die Filtereinheit durchströmt hat. Außerhalb der Regenerationsphase können insbesondere zwei verschiedene Betriebszustände der Druckluftversorgungseinrichtung vorliegen, nämlich der Förderbetriebszustand sowie ein Zustand, bei dem weder regeneriert noch gefördert wird. Bei der letztgenannten Phase ist es nützlich, die Förderleitungsabsperrventileinrichtung zumindest zeitweise in einen geöffneten Schaltzustand zu überführen, um auf diese Weise bei niedrigen Temperaturen ein Einfrieren der Förderleitung und/oder der Förderleitungsabsperrventileinrichtung zu vermeiden. Diese Möglichkeit wird durch die vorliegende Erfindung zur Verfügung gestellt.

Insbesondere ist vorgesehen, dass die erste Ventileinrichtung in einem ersten Schaltzustand den Energiesparsteuerausgang entlüftet und in einem zweiten Schaltzustand den Energiesparsteuerausgang belüftet, und dass ein mit dem Energiesparsteuerausgang gekoppelter Kompressor durch Belüften des Energiesparsteuerausgangs in einen Energiesparzustand überführbar ist. Die erste Ventileinrichtung ist somit ausschließlich für die Steuerung des Kompressors vorgesehen.

Insbesondere unter der zuvor genannten Auslegung im Hinblick auf die erste Ventileinrichtung ist vorgesehen, dass die zweite Ventileinrichtung in einem ersten Schaltzustand einen Steuereingang der Ablassventileinrichtung und einen Steuereingang der Förderleitungsabspenventileinrichtung entlüftet sowie einen Regenerationsluftpfad sperrt und in einem zweiten Schaltzustand den Steuereingang der Ablassventileinrichtung und den Steuereingang der Förderleitungsabsperrventileinrichtung belüftet sowie den Regenerationsluftpfad freigibt und dass die Ablassventileinrichtung bei entlüftetem Steuereingang geschlossen und bei belüftetem Steuereingang geöffnet sowie die Förderieitungsabspenventileinrichtung bei entlüftetem Steuereingang geöffnet und bei belüftetem Steuereingang geschlossen sind. Die zweite Ventileinrichtung bedient somit sowohl die Ablassventileinrichtung als auch die Förderleitungsabsperrventileinrichtung. Ferner wird der Regenerationsluftpfad freigegeben oder gesperrt. Dies ist möglich, da während der Regeneration das Ablassventil stets geöffnet sein muss und die Förderleitung zum Zwecke der Konservierung von Druckluft stets abgesperrt sein soll. Eine Ansteuerung dieser Komponenten mit einer einzigen Ventileinrichtung, nämlich der zweiten Ventileinrichtung, ist insofern besonders ökonomisch.

Nützlicherweise ist vorgesehen, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Förderbetriebszustand vorliegt. Das Ablassventil ist geschlossen, der Regenerationspfad ist gesperrt, die Förderleitungsabsperrventileinrichtung ist offen, und der Kompressor fördert. Es erfolgt somit ein Druckaufbau in der Druckluftversorgungseinrichtung.

Weiterhin ist vorgesehen, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt. Bei geöffnetem Regenerationspfad, geöffneter Ablassventileinrichtung, geschlossener Förderleitungsabsperrventileinrichtung und einem Kompressor im Energiesparzustand kann unter vorteilhafter Energieeinsparung regeneriert werden, wobei die Energieeinsparung einerseits durch das Umschalten des Kompressors in die Leerlaufphase und andererseits durch die Konservierung des in der Förderleitung vorliegenden Druckluftvolumens erfolgt.

Es ist weiterhin bevorzugt, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Sperrbetriebszustand mit geöffneter Förderleitungsabspenventileinrichtung vorliegt. Das Absperrventil ist geschlossen, und der Kompressor befindet sich in seinem Leerlaufzustand. Eine Regeneration findet während dieses Sperrbetriebszustands nicht statt. Allerdings wird dafür gesorgt, dass die Förderleitungsabsperrventileinrichtung offen ist, um so ein Einfrieren dieser Einrichtung bei niedrigen Temperaturen beziehungsweise der damit in Verbindung stehenden Förderleitung zu verhindern.

Gemäß einer weiteren Ausführungsform der vorliegenden Erfindung ist vorgesehen, dass die erste Ventileinrichtung in einem ersten Schaltzustand den Energiesparsteuerausgang entlüftet und einen ersten Steuereingang der Förderleitungsabsperrventileinrichtung entlüftet und in einem zweiten Schaltzustand den Energiesparsteuerausgang belüftet und den ersten Steuereingang der Förderleitungsabsperrventileinrichtung belüftet und dass ein mit dem Energiesparsteuerausgang gekoppelter Kompressor durch Belüften des Energiesparsteuerausgangs in einen Energiesparzustand überführbar ist sowie die Förderleitungsabsperrventileinrichtung bei entlüftetem ersten Steuereingang geöffnet und bei belüftetem ersten Steuereingang bedingt geschlossen ist. Im Gegensatz zur vorstehend geschilderten Ausführungsform bedient die erste Ventileinrichtung nun nicht nur den Energiesparsteuerausgang, sondern auch die Förderleitungsabsperrventileinrichtung.

In diesem Fall ist nützlicherweise vorgesehen, dass die zweite Ventileinrichtung in einem ersten Schaltzustand einen Steuereingang der Ablassventileinrichtung entlüftet sowie einen Regenerationsluftpfad sperrt und in einem zweiten Schaltzustand den Steuereingang der Ablassventileinrichtung belüftet sowie den Regenerationsluftpfad freigibt und dass die Ablassventileinrichtung bei entlüftetem Steuereingang geschlossen und bei belüftetem Steuereingang geöffnet ist. Da die erste Ventileinrichtung die Förderleitungsabsperrventileinrichtung betätigt, ist es ausreichend, dass die zweite Ventileinrichtung, den Regenerationspfad freigibt beziehungsweise sperrt und das Ablassventil betätigt.

Nützlicherweise ist vorgesehen, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Förderbetriebszustand vorliegt. Das Ablassventil ist geschlossen, die Förderleitungsabsperrventileinrichtung ist geöffnet, der Regenerationspfad ist freigegeben, und der Kompressor fördert.

Weiterhin kann vorgesehen sein, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt. Der Regenerationspfad ist freigegeben, und das Ablassventil ist geöffnet. Der Kompressor befindet sich im Leerlauf, und die Förderleitungsabsperrventileinrichtung ist geschlossen.

Weiterhin kann vorgesehen sein, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Sperrbetriebszustand vorliegt. Außehalb der Regenerationsphase bleibt das Ablassventil geschlossen, und der Kompressor kann bei fehlendem Druckluftbedarf in seinem Leerlaufzustand arbeiten.

Im Zusammenhang mit diesem Sperrbetriebszustand ist nützlicherweise vorgesehen, dass eine dritte Ventileinrichtung vorgesehen ist, die in einem ersten Schaltzustand einen zweiten Steuereingang der Förderleitungsabsperrventileinrichtung entlüftet und in einem zweiten Schaltzustand den zweiten Steuereingang der Förderleitungsabsperrventileinrichtung belüftet, und dass die Förderleitungsabsperrventileinrichtung bei belüftetem zweiten Steuereingang geöffnet ist, auch wenn der erste Steuereingang der Förderleitungsabspenventileinrichtung belüftet ist, so dass der Sperrbetriebszustand bei einer dritten Ventileinrichtung im ersten Schaltzustand mit geschlossener und im zweiten Schaltzustand mit geöffneter Förderleitungsabsperrventileinrichtung vorliegt. Die dritte Ventileinrichtung bestimmt also, ob im Sperrbetriebszustand, das heißt bei geschlossenem Ablassventil und nicht förderndem Kompressor, die Förderleitungsabsperrventileinrichtung geöffnet oder geschlossen ist. Da das Öffnen der Förderleitungsabsperrventileinrichtung ein Einfrieren der Ventileinrichtung und der angeschlossenen Leitung verhindern soll, kann auf ein solches Öffnen beispielsweise dann verzichtet werden, wenn ausreichend hohe Temperaturen vorliegen.

Es ist weiterhin bevorzugt, dass in einem vierten Betriebszustand der Druckluftversorgungseinrichtung die erste Ventileinrichtung ihren ersten Schaltzustand einnimmt und die zweite Ventileinrichtung ihren zweiten Schaltzustand einnimmt, wodurch ein Spülbetriebszustand vorliegt. In diesem Betriebszustand sind die Ablassventileinrichtung und die Förderleitungsabsperrventileinrichtung in der Förderphase des Kompressors geöffnet. Folglich kann Luft direkt vom Kompressor zum Ablass der Druckluftversorgungseinrichtung gefördert werden.

Nützlicherweise ist vorgesehen, dass die dritte Ventileinrichtung mit einer Steuerleitung gekoppelt ist, über die weitere Steuerfunktionen in der Druckluftversorgungseinrichtung realisierbar sind. Die dritte Ventileinrichtung ist gemäß den vorstehenden Ausführungen dafür vorgesehen, bei Bedarf die Förderleitungsabsperrventileinrichtung zu schließen. Da dies nur in bestimmten Betriebszuständen der Druckluftversorgungseinrichtung erforderlich sein wird, kann die von der dritten Ventileinrichtung zu steuernde Druckluft auch für weitere Funktionen verwendet werden, ohne dabei die geschilderten Energiesparfunktionen zu beeinträchtigen.

Beispielsweise kann vorgesehen sein, dass die Steuerleitung mit einem Steuereingang eines einen Verbraucherkreis versorgenden Überströmventils verbunden ist. Die Überströmventile der Druckluftversorgungseinrichtung bilden eine Mehrkreisschutzventileinrichtung, die auf der Grundlage, der den Überströmventilen zugeordneten Öffnungs- und Schließdrücke für eine bestimmte Füllreihenfolge und für eine Absicherung der einzelnen Verbraucherkreise gegeneinander sorgt. Indem ein solches Überströmventil nun durch die dritte Ventileinrichtung ansteuerbar ist, kann auf die Funktionalität des Mehrkreisschutzventils direkt Einfluss genommen werden.

Dabei kann vorgesehen sein, dass durch Belüften des Steuereingangs ein Öffnen des Überströmventils unterstützt wird. Hierdurch kann ein an sich mit niedriger Priorität zu befüllender Verbraucherkreis gezielt bevorzugt befüllt werden. Dabei kann es sich insbesondere um den der Luftfederanlage des Fahrzeugs zugeordneten Druckluftkreis handeln oder um einen anderen Kreis, der ohne Sicherheitseinbußen auch dann befüllt werden kann, wenn noch kein ausreichender Bremsdruck zur Verfügung steht. Ebenfalls ist es möglich, die mit der Steuerleitung in Verbindung stehenden Überströmventile permanent offen zu halten, wodurch ein Schließen der Überströmventile beim Unterschreiten des Schließdrucks vermieden wird.

Gemäß einem anderen Konzept kann vorgesehen sein, dass durch Belüften des Steuereingangs ein geschlossener Zustand des Überströmventils herbeigeführt und aufrechterhalten wird. Hierdurch kann insbesondere ein defekter Kreis von den anderen Kreisen getrennt werden, so dass das Druckluftsystem im Bereich seiner optimalen Betriebsdrücke weiter betrieben werden kann, ohne dass es über den defekten Kreis Druckluft verlieren würde.

Nützlicherweise ist vorgesehen, dass die Ventileinrichtungen 3/2-Wege-Ventile sind. Hierdurch können die für die beschriebenen Funktionalitäten erforderlichen Anschlüsse und Schaltzustände zur Verfügung gestellt werden.

Insbesondere kann vorgesehen sein, dass eine elektronische Steuereinheit vorgesehen ist und dass die Ventileinrichtungen Magnetventile sind. Auf diese Weise können die verschiedenen Betriebszustände der Druckluftversorgungseinrichtung auf der Grundlage intelligenter Berechnungen eingenommen werden, wobei insbesondere zahlreiche das Nutzfahrzeug betreffende Informationen berücksichtigt werden können. Diese können der elektronischen Steuereinheit direkt oder über einen Datenbus zur Verfügung gestellt werden, wobei insbesondere an einen Datenbus verschiedene Steuereinheiten des Nutzfahrzeugs angeschlossen sein können, um so mit der Steuereinheit der Druckluftversorgungseinrichtung Informationen auszutauschen.

Weiterhin kann vorgesehen sein, dass die Ablassventileinrichtung ein 2/2-WegeVentil ist.

Ebenfalls ist es nützlich, dass die Förderleitungsabsperrventileinrichtung ein 2/2-Wege-Ventil ist.

Die Erfindung baut auf dem gattungsgemäßen Verfahren dadurch auf, dass durch die erste Ventileinrichtung der Energiesparsteuerausgang und durch die zweite Ventileinrichtung die Ablassventileinrichtung und die Regeneration der Filtereinheit gesteuert werden , wobei des Energinsparstenerausgang (28) ausschlieflich mittels der esten Vontileinrichtung (16) mit dem Ablass- ausgang (24) verbind bar ist, und dass die Förderleitungsabsperrventileinrichtung während der Regenerationsphase der Filtereinheit geschlossen ist und außerhalb der Regenrationsphase bei geschlossener Ablassventileinrichtung und belüftetem Energiesparsteuerausgang in einen geöffneten Schaltzustand überführt wird. Auf diese Weise werden die Vorteile und Besonderheiten der erfindungsgemäßen Drurckluftversorgungseinrichtung auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicherweise dadurch weitergebildet, dass die erste Ventileinrichtung in einem ersten Schaltzustand den Energiesparsteuerausgang entlüftet und in einem zweiten Schaltzustand den Energiesparsteuerausgang belüftet, und dass ein mit dem Energiesparsteuerausgang gekoppelter Kompressor durch Belüften des Energiesparsteuerausgangs in einen Energiesparzustand überführbar ist.

Weiterhin kann vorgesehen sein, dass die zweite Ventileinrichtung in einem ersten Schaltzustand einen Steuereingang der Ablassventileinrichtung und einen Steuereingang der Förderleitungsabsperrventileinrichtung entlüftet sowie einen Regenerationsluftpfad sperrt und in einem zweiten Schaltzustand den Steuereingang der Ablassventileinrichtung und den Steuereingang der Förderleitungsabsperrventileinrichtung belüftet sowie den Regenerationsluftpfad freigibt und dass die Ablassventileinrichtung bei entlüftetem Steuereingang geschlossen und bei belüftetem Steuereingang geöffnet sowie die Förderleitungsabsperrventileinrichtung bei entlüftetem Steuereingang geöffnet und bei belüftetem Steuereingang geschlossen sind.

Es ist bevorzugt, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Lastbetriebszustand vorliegt.

Es ist weiterhin bevorzugt, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt.

Weiterhin ist nützlich, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Sperrbetriebszustand mit geöffneter Förderleitungsabsperrventileinrichtung vorliegt.

Gemäß einer weiteren Ausführungsform des erfindungsgemäßen Verfahrens ist vorgesehen, dass die erste Ventileinrichtung in einem ersten Schaltzustand den Energiesparsteuerausgang entlüftet und einen ersten Steuereingang der Förderleitungsabsperrventileinrichtung entlüftet und in einem zweiten Schaltzustand den Energiesparsteuerausgang belüftet und den ersten Steuereingang der Förderleitungsabsperrventileinrichtung belüftet und dass ein mit dem Energiesparsteuerausgang gekoppelter Kompressor durch Belüften des Energiesparsteuerausgangs in einen Energiesparzustand überführbar ist sowie die Förderleitungsabsperrventileinrichtung bei ersten entlüftetem Steuereingang geöffnet und bei belüftetem ersten Steuereingang bedingt geschlossen ist.

Dabei ist nützlich, dass die zweite Ventileinrichtung in einem ersten Schaltzustand einen Steuereingang der Ablassventileinrichtung entlüftet sowie einen Regenerationsluftpfad sperrt und in einem zweiten Schaltzustand den Steuereingang der Ablassventileinrichtung belüftet sowie den Regenerationsluftpfad freigibt und dass die Ablassventileinrichtung bei entlüftetem Steuereingang geschlossen und bei belüftetem Steuereingang geöffnet ist.

Es ist ferner vorgesehen, dass in einem ersten Betriebszustand der Druckluftversorgungseinrichtung die erste Ventileinrichtung ihren ersten Schaltzustand einnimmt und die zweite Ventileinrichtung ihren ersten Schaltzustand einnimmt, wodurch ein Förderbetriebszustand vorliegt.

Weiterhin ist bevorzugt, dass in einem zweiten Betriebszustand der Druckluftversorgungseinrichtung die erste Ventileinrichtung ihren zweiten Schaltzustand einnimmt und die zweite Ventileinrichtung ihren zweiten Schaltzustand einnimmt, wodurch ein Regenerationsbetriebszustand vorliegt.

Es ist auch bevorzugt, dass in einem dritten Betriebszustand der Druckluftversorgungseinrichtung die erste Ventileinrichtung ihren zweiten Schaltzustand einnimmt und die zweite Ventileinrichtung ihren ersten Schaltzustand einnimmt, wodurch ein Sperrbetriebszustand vorliegt.

Ferner ist es von Vorteil, dass eine dritte Ventileinrichtung vorgesehen ist, die in einem ersten Schaltzustand einen zweiten Steuereingang der Förderleitungsabsperrventileinrichtung entlüftet und in einem zweiten Schaltzustand den zweiten Steuereingang der Förderleitungsabsperrventileinrichtung belüftet, und dass die Förderleitungsabsperrventileinrichtung bei belüftetem zweiten Steuereingang geöffnet ist, auch wenn der erste Steuereingang der Förderleitungsabsperrventileinrichtung belüftet ist, so dass der Sperrbetriebszustand bei einer dritten Ventileinrichtung im ersten Schaltzustand mit geschlossener und im zweiten Schaltzustand mit geöffneter Förderleitungsabsperrventileinrichtung vorliegt.

Die Erfindung kann weiterhin so ausgebildet sein, dass in einem vierten Betriebszustand der Druckluftversorgungseinrichtung die erste Ventileinrichtung ihren ersten Schaltzustand einnimmt und die zweite Ventileinrichtung ihren zweiten Schaltzustand einnimmt, wodurch ein Spülbetriebszustand vorliegt.

Ferner kann vorgesehen sein, dass die dritte Ventileinrichtung mit einer Steuerleitung gekoppelt ist, über die weitere Steuerfunktionen in der Druckluftversorgungseinrichtung realisierbar sind.

Das erfindungsgemäße Verfahren ist in vorteilhafter Weise dadurch weitergebildet, dass die Steuerleitung mit einem Steuereingang eines einen Verbraucherkreis versorgenden Überströmventils verbunden ist.

Weiterhin ist es nützlich, dass durch Belüften des Steuereingangs ein Öffnen des Überströmventils unterstützt wird.

Es kann auch vorgesehen sein, dass durch Belüften des Steuereingangs ein geschlossener Zustand des Überströmventils herbeigeführt und aufrechterhalten wird.

Weiterhin ist es von Vorteil, dass die Ventileinrichtungen durch eine elektronische Steuereinheit angesteuert werden.

Die Erfindung wird nun mit Bezug auf die begleitende Zeichnung anhand besonders bevorzugter Ausführungsformen beispielhaft erläutert.

Es zeigen:
- Figur 1: eine schematische Teildarstellung einer ersten Ausführungsform einer erfindungsgemäßen Druckluftversorgungseinrichtung und
- Figur 2: eine schematische Teildarstellung einer zweiten Ausführungsform einer erfindungsgemäßen Druckluftversorgungseinrichtung.

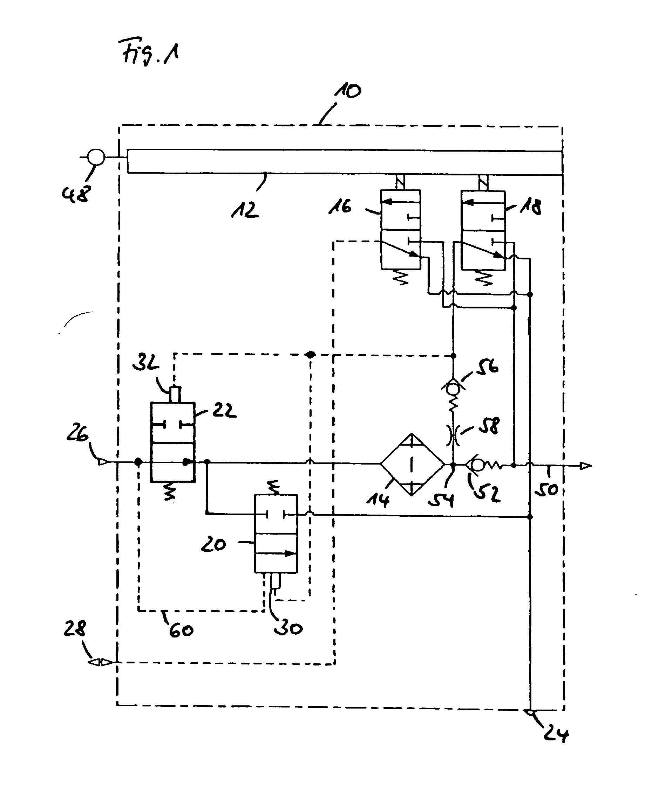

Figur 1 zeigt eine schematische Teildarstellung einer ersten Ausführungsform einer erfindungsgemäßen Druckluftversorgungseinrichtung. Die Druckluftversorgungseinrichtung 10 enthält eine elektronische Steuereinheit 12. Die Steuereinheit 12 ist über eine elektrische Schnittstelle 48 zum Zwecke der Energieversorgung und zum Signalaustausch mit anderen Fahrzeugkomponenten ausgestattet. Von der elektronischen Steuereinheit 12 sind zwei 3/2-Wege-Magnetventile 16, 18 ansteuerbar. Weitere Komponenten, beispielsweise eine Heizung, Drucksensoren und weitere Magnetventile, die im Zusammenhang mit der elektronischen Steuereinheit 12 vorgesehen sein können, sind nicht dargestellt. Die Druckluftversorgungseinrichtung hat einen mit einem Kompressor koppelbaren Drucklufteingang 26 und einen Ablassausgang 24. Zwischen dem Drucklufteingang 26 und dem Ablassausgang 24 ist ein Ablassventil 20 angeordnet. Mit dem Drucklufteingang 26 steht weiterhin eine Filtereinheit 14 in Verbindung. Über diese Filterfeinheit 14 wird die dem Drucklufteingang 26 zugeführte Druckluft den Verbraucherkreisen zugeleitet, wobei auf diesem Pfad ein Rückschlagventil 52 vorgesehen ist, das ein Rückströmen von Druckluft aus den Verbraucherkreisen verhindert. Die Versorgung der Verbraucherkreise aus der mit dem Rückschlagventil 52 gekoppelten Leitung erfolgt im Allgemeinen über eine in die Druckluftversorgungseinrichtung eingebundene hier nicht dargestellte Mehrkreisschutzventileinrichtung. Die Druckluftversorgungseinrichtung 10 hat weiterhin einen Energiesparsteuerausgang 28, an dem ein Steuereingang des mit dem Drucklufteingang 26 gekoppelten Kompressors angeschlossen werden kann.
Die erwähnten und weitere Komponenten sind wie folgt miteinander verschaltet. Das Magnetventil 16 ist mit einer Versorgungsleitung 50 stromabwärts des Rückschlagventils 52, dem Ablassausgang 24 und dem Energiesparsteuerausgang 28 verbunden. Das Magnetventil 18 steht ebenfalls mit der Versorgungsleitung 50 und dem Ablassausgang 24 in Verbindung. Eine weitere Verbindung besteht zu einem Leitungsabschnitt 54 zwischen der Filtereinheit 14 und dem Rückschlagventil 52, wobei zwischen dem zweiten Magnetventil 18 und dem Leitungsabschnitt 54 ein Rückschlagventil 56 und eine Drossel 58 in Reihe geschaltet sind. Insofern ist das Magnetventil 18 Teil einer das Rückschlagventil 52 umgehenden Druckluftführung, die als Regenerationsluftpfad bezeichnet werden kann. Der mit dem Rückschlagventil 56 verbundene Anschluss des Magnetventils 18 steht weiterhin mit einem Steuereingang 32 des Förderleitungsabsperrventils 22 sowie mit einem Steuereingang 30 des Ablassventils 20 in Verbindung. Eine weitere Steuerleitung 60 verbindet das Ablassventil 20 mit dem Drucklufteingang 26, wodurch das Ablassventil 20 auch als Überdruckventil arbeitet. Alternativ kann ein separates Überdruckventil vorgesehen sein. Ebenfalls ist es möglich, die Steuerleitung 60 stromabwärts des Förderleitungsabsperrventils 22 mit der Förderleitung zu verbinden.

Wie vorstehend erläutert, stehen die Magnetventile 16, 18 mit der Versorgungsleitung 50 unmittelbar stromabwärts des Rückschlagventils 52 in Verbindung. Dabei handelt es sich um eine beispielhafte Ausführungsform. Ebenfalls ist es möglich, die Magnetventile 16, 18 aus einer Druckleitung zu versorgen, die stromabwärts von Überströmventilen liegt. Dabei kann es sich um eine Versorgung direkt aus den Verbraucherkreisen handeln. Werden bestimmte Verbraucherkreise aus vorgelagerten Verbraucherkreisen seriell versorgt, wobei zwischen den vorgelagerten Verbraucherkreisen und den nachgeordneten Verbraucherkreisen ein weiteres Überströmventil vorgesehen ist, kann die Versorgung der Ventileinrichtungen 16, 18 auch aus dem Leitungsabschnitt zwischen den vorgelagerten und den Überströmventilen der nachgeordneten Kreise erfolgen.

Im unbestromten Zustand befinden sich die Magnetventile 16, 18 in ihren dargestellten Schaltzuständen, während sie durch selektives Bestromen gegen Rückstellkräfte umgeschaltet werden können.

Sind beide Magnetventile 16, 18 stromlos, so ist der Regenerationsluftpfad aufgrund der Schaltstellung des zweiten Magnetventils 18 geschlossen. Diese Schaltstellung bedingt auch ein Entlüften des Steuereingangs 32 des Förderleitungsabsperrventils 22 sowie ein Entlüften des Steuereingangs 30 des Ablassventils 20. Die unbestromte Schaltstellung des ersten Magnetventils 16 bewirkt eine Entlüftung des Energiesparsteuerausgangs, so dass der Kompressor fördert. Insgesamt liegt bei förderndem Kompressor, geöffnetem Förderleitungsabsperrventil, geschlossenem Ablassventil und gesperrtem Regenerationsluftpfad eine Förderphase vor.

Werden beide Magnetventile 16, 18 bestromt, so wird der Regenerationsluftpfad aufgrund des Umschaltens des Magnetventils 18 freigegeben. Ebenfalls wird das Absperrventil 20 durch Belüften seines Steuereingangs 30 geöffnet, und das Förderleitungsabsperrventil 22 wird durch Belüften des Steuereingangs 32 geschlossen. Es kommt somit zu einer Luftströmung von der Versorgungsleitung 50 über das zweite Magnetventil 18, das Rückschlagventil 56, die Drossel 58, die Filtereinheit 14 und das Ablassventil 20 zum Ablassausgang 24. Es liegt eine Regenerationsphase vor. Ist das erste Magnetventil 16 bestromt, während das zweite Magnetventil 18 unbestromt ist, so liegt ein so genannter Sperrbetriebszustand vor. Der Kompressor fördert aufgrund des belüfteten Energiesparsteuerausgangs 28 nicht, und der Regenertationspfad sowie das Ablassventil 20 sind geschlossen. Gleichzeitig ist das Förderleitungsabsperrventil 22 geöffnet, so das ein Einfrieren dieses Förderleitungabsperrventils 22 und der Förderleitung vermieden wird. Gemäß der Darstellung in Figur 1 ist das 3/2-Wege-Magnetventil Teil des Regenerationsluftpfades. Ebenfalls kann vorgesehen sein, dass durch ein solches oder ähnliches Magnetventil ein weiteres Ventil, dass dann als 2/2-Wege-Ventil ausgelegt sein kann, angesteuert wird, wobei dieses dann Teil des Regenerationsluftpfades ist.

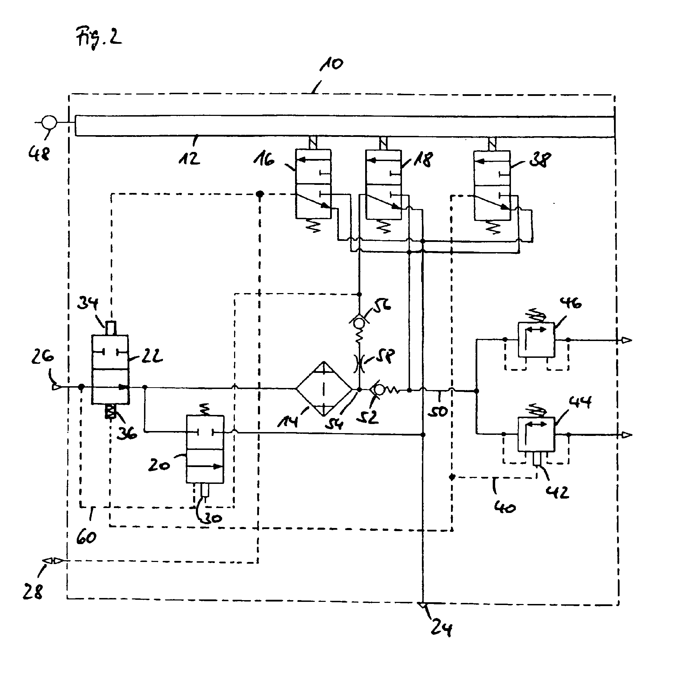

Figur 2 zeigt eine schematische Teildarstellung einer zweiten Ausführungsform einer erfindungsgemäßen Druckluftversorgungseinrichtung. Die Ausführungsform gemäß Figur 2 hat mit derjenigen aus Figur 1 zahlreiche Gemeinsamkeiten, so dass diesbezüglich auf die Beschreibung der Figur 1 verwiesen werden kann. Unterschiede bestehen im Hinblick auf die Auslegung der Förderleitungsabsperrventileinheit 22, die Verschaltung der Magnetventile 16, 18 in Bezug auf die weiteren Komponenten sowie darin, dass eine weitere von der Steuereinheit 12 ansteuerbare als 3/2-Wege-Magnetventil ausgelegte Ventileinrichtung 38 an der Steuerung der Betriebszustände der Druckluftversorgungseinrichtung 10 beteiligt ist. Weiterhin sind zwei Überströmventile 44, 46 dargestellt, über die Verbraucherkreise mit Druckluft versorgt werden. Es können weitere Überströmventile parallel zu den Überströmventilen 44, 46 vorgesehen sein. Ebenfalls ist es möglich, weitere Überströmventile zu mindestens einem der dargestellten Überströmventile 44, 46 in Reihe zu schalten und hierüber nachgeordnete Verbraucherkreise mit ebenfalls nachgeordneten Überströmventilen seriell zu versorgen.

Das erste Magnetventil 16 steht mit einem ersten Steuereingang 34 des mit zwei Steuereingängen 34, 36 ausgestatteten Förderleitungsabsperrventils 22 in Verbindung. Eine weitere Verbindung liegt zum Energiesparsteuerausgang 28 vor. Die anderen Anschlüsse des ersten Magnetventils 16 sind wiederum mit der Versorgungsleitung 50 beziehungsweise dem Ablassausgang 24 verbunden, wobei im Hinblick auf die Versorgung wiederum gilt, dass diese auch von einem Punkt stromabwärts bezüglich eines oder mehrerer der beispielhaft dargestellten Überströmventile 44, 46 erfolgen kann. Das Magnetventil 18 ist, wie im Zusammenhang mit Figur 1, Teil des Regenrationsluftpfades. Es steht ferner mit dem Steuereingang 30 des Ablassventils 20 in Verbindung. Das dritte Magnetventil 38 steht, wie das erste Magnetventil 16 und das zweite Magnetventil 18, mit der Druckluftversorgung und der Entlüftung in Verbindung. Der verbleibende Anschluss des Magnetventils 38 führt zu einem zweiten Steuereingang 36 des Förderleitungsabsperrventils 22, wobei der zweite Steuereingang 36 gegenüber dem ersten Steuereingang 34 priorisiert ist. Dies bedeutet, dass bei gleichem Druck an beiden Steuereingängen 34, 36 das Förderleitungsabsperrventil 22 in die Position geschaltet wird, die es auch bei entlüftetem ersten Steuereingang 34 einnimmt. An das dritte Magnetventil 38 ist eine weitere Steuerleitung 40 angeschlossen, die zu einem Steuereingang 42 eines Überströmventils 44 führt. Dieses Überströmventil 44 und das weitere dargestellte Überströmventil 46 haben bestimmte Öffnungs- und Schließdrücke, so dass eine Füllreihenfolge eingehalten wird und die Verbraucherkreise gegeneinander abgesichert werden. Wird jedoch der Steuereingang 42 des Überströmventils 44 belüftet, so wird das Überströmventil 44 unabhängig von dem aus der Versorgungsleitung 50 anstehenden Druck geöffnet, beziehungsweise in seinem geöffneten Zustand gehalten. Folglich kann durch Umschalten des Magnetventils 38 ein Verbraucherkreis gezielt befüllt werden. Grundsätzlich ist auch die umgekehrte Variante denkbar, nämlich ein Überströmventil mit einem Steuereingang, der den Schließvorgang des Überströmventils unterstützt. Dann können bestimmte Verbraucherkreise gezielt vom Rest der Druckluftversorgungseinrichtung 10 abgekoppelt werden.

Im Hinblick auf die nachfolgende Beschreibung der verschiedenen der im Hinblick auf Regeneration und die geforderte Energieeinsparung beschriebenen Schaltzustände ist die Steuerleitung 40 optional, kann also auch fortgelassen werden. Die nachfolgende Beschreibung betrachtet insofern die durch die Steuerleitung 40 herbeigeführte Wirkung nicht.

Im unbestromten Zustand befinden sich die Magnetventile 16, 18, 38 in ihren dargestellten Schaltzuständen, während sie durch selektives Bestromen gegen Rückstellkräfte umgeschaltet werden können.

Sind die Magnetventile 16, 18 stromlos, so ist der Regenerationsluftpfad geschlossen, und der Steuereingang 30 des Ablassventils 20 ist entlüftet. Das Ablassventil ist insofern geschlossen. Aufgrund der Schaltstellung des ersten Magnetventils 16 ist der erste Steuereingang 34 des Förderleitungsabsperrventils 22 ebenfalls entlüftet, so dass das Förderleitungsabsperrventil 22 geöffnet ist, und zwar unabhängig von der Schaltstellung des dritten Magnetventils 38. Über das erste Magnetventil 16 wird weiterhin der Energiesparsteuerausgang 28 entlüftet. Folglich liegt ein Förderbetriebszustand vor.

Werden die Magnetventile 16, 18 bestromt, während das dritte Magnetventil 38 in seinem stromlosen Zustand verbleibt, so wird der Regenerationsluftpfad durch das zweite Magnetventil 18 freigegeben, und der Steuereingang 30 des Ablassventils 20 wird belüftet. Folglich öffnet das Ablassventil 20. Durch das erste Magnetventil 16 wird der Energiesparsteuerausgang 28 belüftet, was ein Umschalten des Kompressors in seinen Leerlaufzustand bewirkt. Weiterhin wird der erste Steuereingang 34 des Förderleitungsabsperrventils 22 belüftet, während der zweite Steuereingang 36 des Förderleitungsabsperrventils aufgrund des stromlosen Zustands des dritten Magnetventils 38 entlüftet ist. Folglich schließt das Förderleitungsabsperrventil. Es liegt ein Regenerationszustand vor.

Wird das erste Magnetventil 16 bestromt, während das zweite Magnetventil 18 in seinem unbestromten Zustand verbleibt, so ist der Regenerationsluftpfad gesperrt, wobei sich der Kompressor aufgrund des entlüfteten Energiesparsteuerausgangs 28 aber dennoch in seiner Leerlaufphase befindet. Das Ablassventil 20 ist aufgrund des entlüfteten Steuereingangs 30 geschlossen. Folglich liegt ein Sperrbetriebszustand vor. Dieser kann in zwei Varianten realisiert sein, je nach Schaltstellung des dritten Magnetventils 38. Ist dieses unbestromt, so ist der zweite Steuereingang 36 des Förderleitungsabsperrventils 22 entlüftet, so dass aufgrund des belüfteten ersten Steuereingangs 34 das Förderleitungsabsperrventil 22 geschlossen ist. Wird das dritte Magnetventil 38 jedoch bestromt, so sind beide Steuereingänge 34, 36 des Förderleitungsabsperrventils 22 belüftet. Dies führt aufgrund der Priorisierung des zweiten Steuereingangs 36 gegenüber dem ersten Steuereingang 34 zu einem Öffnen des Förderleitungsabsperrventils 22. Der Sperrbetriebszustand kann somit wahlweise mit geöffnetem oder geschlossenem Förderleitungsabsperrventil 22 realisiert sein.

Ein weiterer Betriebszustand der in Figur 2 dargestellten Druckluftversorgungseinrichtung 10 ist wiederum unabhängig von der Schaltstellung des dritten Magnetventils 38. Ist das erste Magnetventil 16 unbestromt, während das zweite Magnetventil 18 bestromt ist, so ist der Regenerationsluftpfad freigegeben, und das Ablassventil 20 ist aufgrund des belüfteten Steuereingangs 30 geöffnet. Ebenso ist das Förderleitungsabsperrventil 22 aufgrund des entlüfteten ersten Steuereingangs 34 geöffnet, und der Kompressor fördert aufgrund des entlüfteten Energiesparsteuerausgangs 28. In dieser Situation fördert der Kompressor Druckluft direkt über das Förderleitungsabsperrventil 22 und das Ablassventil 20 zum Ablassausgang 24. Es liegt somit ein Spülbetriebszustand vor.

### Bezugszeichenliste:

- 10: Druckluftversorgungseinrichtung
- 12: Steuereinheit
- 14: Filtereinheit
- 16: Ventileinrichtung
- 18: Ventileinrichtung
- 20: Ablassventil
- 22: Förderleitungsabsperrventileinrichtung
- 24: Ablassausgang
- 26: Drucklufteingang
- 28: Energiesparsteuerausgang
- 30: Steuereingang
- 32: Steuereingang
- 34: Steuereingang
- 36: Steuereingang
- 38: Ventileinrichtung
- 40: Steuerleitung
- 42: Steuereingang
- 44: Überströmventil
- 46: Überströmventil
- 48: Schnittstelle
- 50: Versorgungsleitung
- 52: Rückschlagventil
- 54: Leitungsabschnitt
- 56: Rückschlagventil
- 58: Drossel
- 60: Steuerleitung

## Patentansprüche

1. Druckluftversorgungseinrichtung (10) für ein Nutzfahrzeug mit
- einem mit einem Kompressor koppelbaren Drucklufteingang (26),
- einer mit dem Drucklufteingang (26) über eine Förderleitung gekoppelten Filtereinheit (14),
- einer mit einem Ablassausgang (24) und der Förderleitung gekoppelten Ablassventileinrichtung (20),
- einem mit einem Steuereingang des Kompressors koppelbaren Energiesparsteuerausgang (28),
- einer zwischen dem Kompressor und der Filtereinheit (14) angeordneten Förderleitungsabsperrventileinrichtung (22) und
- einer ersten Ventileinrichtung (16) sowie einer zweiten Ventileinrichtung (18), wobei durch die Ventileinrichtungen (16, 18) die Ablassventileinrichtung (20), der Energiesparsteuerausgang (28), die Regeneration der Filtereinheit (14) und die Förderleitungsabsperrventileinrichtung (22) steuerbar sind, **dadurch gekennzeichnet,**
- **dass** durch die erste Ventileinrichtung (16) der Energiesparsteuerausgang (28) und durch die zweite Ventileinrichtung (18) die Ablassventileinrichtung (20) und die Regeneration der Filtereinheit (14) steuerbar sind und
- **dass** die Förderleitungsabsperrventileinrichtung (22) während der Regenerationsphase der Filtereinheit (14) geschlossen ist und außerhalb der Regenrationsphase bei geschlossener Ablassventileinrichtung (20) und belüftetem Energiesparsteuerausgang (28) in einen geöffneten Schaltzustand überführbar ist und
- **dass** die Druckluftversorgungseinrichtung (10) eine dritte Ventileinrichtung (38) umfasst, die an einer Steuerung von Betriebszuständen der Druckluftversorgungseinrichtung (10) beteiligt ist.

2. Druckluftversorgungseinrichtung (10) nach Anspruch 1, **dadurch gekennzeichnet, dass** die erste Ventileinrichtung (16) in einem ersten Schaltzustand den Energiesparsteuerausgang (28) entlüftet und in einem zweiten Schaltzustand den Energiesparsteuerausgang belüftet, und dass ein mit dem Energiesparsteuerausgang (28) gekoppelter Kompressor durch Belüften des Energiesparsteuerausgangs in einen Energiesparzustand überführbar ist.

3. Druckluftversorgungseinrichtung (10) nach Anspruch 1 oder 2, **dadurch gekennzeichnet, dass** die zweite Ventileinrichtung (18) in einem ersten Schaltzustand einen Steuereingang (30) der Ablassventileinrichtung (20) und einen Steuereingang (32) der Förderleitungsabsperrventileinrichtung (22) entlüftet sowie einen Regenerationsluftpfad sperrt und in einem zweiten Schaltzustand den Steuereingang (30) der Ablassventileinrichtung (20) und den Steuereingang (32) der Förderleitungsabsperrventileinrichtung (22) belüftet sowie den Regenerationsluftpfad freigibt und dass die Ablassventileinrichtung (20) bei entlüftetem Steuereingang (30) geschlossen und bei belüftetem Steuereingang geöffnet sowie die Förderleitungsabsperrventileinrichtung (22) bei entlüftetem Steuereingang (32) geöffnet und bei belüftetem Steuereingang geschlossen sind.

4. Druckluftversorgungseinrichtung (10) nach Anspruch 3, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein Förderbetriebszustand vorliegt.

5. Druckluftversorgungseinrichtung (10) nach Anspruch 3 oder 4, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Regenerationsbetriebszustand vorliegt.

6. Druckluftversorgungseinrichtung (10) nach einem der Ansprüche 3 bis 5, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Sperrbetriebszustand mit geöffneter Förderleitungsabsperrventileinrichtung (22) vorliegt.

7. Druckluftversorgungseinrichtung (10) nach Anspruch 1, **dadurch gekennzeichnet, dass** die erste Ventileinrichtung (16) in einem ersten Schaltzustand den Energiesparsteuerausgang (28) entlüftet und einen ersten Steuereingang (34) der Förderleitungsabsperrventileinrichtung (22) entlüftet und in einem zweiten Schaltzustand den Energiesparsteuerausgang (28) belüftet und den ersten Steuereingang (34) der Förderleitungsabsperrventileinrichtung (22) belüftet und dass ein mit dem Energiesparsteuerausgang (28) gekoppelter Kompressor durch Belüften des Energiesparsteuerausgangs in einen Energiesparzustand überführbar ist sowie die Förderleitungsabsperrventileinrichtung (22) bei entlüftetem ersten Steuereingang (34) geöffnet und bei belüftetem ersten Steuereingang bedingt geschlossen ist.

8. Druckluftversorgungseinrichtung (10) nach Anspruch 1 oder 7, **dadurch gekennzeichnet, dass** die zweite Ventileinrichtung (18) in einem ersten Schaltzustand einen Steuereingang (30) der Ablassventileinrichtung (20) entlüftet sowie einen Regenerationsluftpfad sperrt und in einem zweiten Schaltzustand den Steuereingang (30) der Ablassventileinrichtung (20) belüftet sowie den Regenerationsluftpfad freigibt und dass die Ablassventileinrichtung (20) bei entlüftetem Steuereingang (30) geschlossen und bei belüftetem Steuereingang geöffnet ist.

9. Druckluftversorgungseinrichtung (10) nach Anspruch 8, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein Förderbetriebszustand vorliegt.

10. Druckluftversorgungseinrichtung (10) nach Anspruch 8 oder 9, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Regenerationsbetriebszustand vorliegt.

11. Druckluftversorgungseinrichtung (10) nach einem der Ansprüche 8 bis 10, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Sperrbetriebszustand vorliegt.

12. Druckluftversorgungseinrichtung (10) nach Anspruch 11, **dadurch gekennzeichnet, dass** eine dritte Ventileinrichtung (38) vorgesehen ist, die in einem ersten Schaltzustand einen zweiten Steuereingang (36) der Förderleitungsabsperrventileinrichtung (22) entlüftet und in einem zweiten Schaltzustand den zweiten Steuereingang (36) der Förderleitungsabsperrventileinrichtung (22) belüftet, und dass die Förderleitungsabsperrventileinrichtung (22) bei belüftetem zweiten Steuereingang (36) geöffnet ist, auch wenn der erste Steuereingang (34) der Förderleitungsabsperrventileinrichtung (22) belüftet ist, so dass der Sperrbetriebszustand bei einer dritten Ventileinrichtung (38) im ersten Schaltzustand mit geschlossener und im zweiten Schaltzustand mit geöffneter Förderleitungsabsperrventileinrichtung (22) vorliegt.

13. Druckluftversorgungseinrichtung (10) nach einem der Ansprüche 8 bis 12, **dadurch gekennzeichnet, dass** in einem vierten Betriebszustand der Druckluftversorgungseinrichtung die erste Ventileinrichtung (16) ihren ersten Schaltzustand einnimmt und die zweite Ventileinrichtung (18) ihren zweiten Schaltzustand einnimmt, wodurch ein Spülbetriebszustand vorliegt.

14. Druckluftversorgungseinrichtung (10) nach Anspruch 12 oder 13, **dadurch gekennzeichnet, dass** die dritte Ventileinrichtung (18) mit einer Steuerleitung (40) gekoppelt ist, über die weitere Steuerfunktionen in der Druckluftversorgungseinrichtung realisierbar sind.

15. Druckluftversorgungseinrichtung (10) nach Anspruch 14, **dadurch gekennzeichnet, dass** die Steuerleitung mit einem Steuereingang (42) eines einen Verbraucherkreis versorgenden Überströmventils (44) verbunden ist.

16. Druckluftversorgungseinrichtung (10) nach Anspruch 15, **dadurch gekennzeichnet, dass** durch Belüften des Steuereingangs (42) ein Öffnen des Überströmventils (44) unterstützt wird.

17. Druckluftversorgungseinrichtung (10) nach Anspruch 15, **dadurch gekennzeichnet, dass** durch Belüften des Steuereingangs ein geschlossener Zustand des Überströmventils herbeigeführt und aufrechterhalten wird.

18. Druckluftversorgungseinrichtung (10) nach einem der vorhergehenden Ansprüche, **dadurch gekennzeichnet, dass** die Ventileinrichtungen (16, 18, 38) 3/2-Wege-Ventile sind.

19. Druckluftversorgungseinrichtung (10) nach einem der vorhergehenden Ansprüche, **dadurch gekennzeichnet, dass** eine elektronische Steuereinheit (12) vorgesehen ist und dass die Ventileinrichtungen (16, 18) Magnetventile sind.

20. Druckluftversorgungseinrichtung (10) nach einem der vorhergehenden Ansprüche, **dadurch gekennzeichnet, dass** die Ablassventileinrichtung (20) ein 2/2-Wege-Ventil ist.

21. Druckluftversorgungseinrichtung (10) nach einem der vorhergehenden Ansprüche, **dadurch gekennzeichnet, dass** die Förderleitungsabsperrventileinrichtung (22) ein 2/2-Wege-Ventil ist.

22. Verfahren zum Betreiben einer Druckluftversorgungseinrichtung (10) mit einem mit einem Kompressor koppelbaren Drucklufteingang (26), einer mit dem Drucklufteingang (26) über eine Förderleitung gekoppelten Filtereinheit (14), einer mit einem Ablassausgang (24) und der Förderleitung gekoppelten Ablassventileinrichtung (20), einem mit einem Steuereingang des Kompressors koppelbaren Energiesparsteuerausgang (28), einer zwischen dem Kompressor und der Filtereinheit (14) angeordneten Förderleitungsabsperrventileinrichtung (22) und einer ersten Ventileinrichtung (16) sowie einer zweiten Ventileinrichtung (18), wobei im Rahmen des Verfahrens vorgesehen ist, dass durch die Ventileinrichtungen (16, 18) die Ablassventileinrichtung (20), der Energiesparsteuerausgang (28), die Regeneration der Filtereinheit (14) und die Förderleitungsabsperrventileinrichtung (22) gesteuert werden, **dadurch gekennzeichnet,**
- **dass** durch die erste Ventileinrichtung (16) der Energiesparsteuerausgang (28) und durch die zweite Ventileinrichtung (18) die Ablassventileinrichtung (20) und die Regeneration der Filtereinheit (14) gesteuert werden und
- **dass** die Förderleitungsabsperrventileinrichtung (22) während der Regenerationsphase der Filtereinheit (14) geschlossen ist und außerhalb der Regenrationsphase bei geschlossener Ablassventileinrichtung (20) und belüftetem Energiesparsteuerausgang (28) in einen geöffneten Schaltzustand überführt wird und
- **dass** die Druckluftversorgungseinrichtung (10) eine dritte Ventileinrichtung (38) umfasst, die an einer Steuerung von Betriebszuständen der Druckluftversorgungseinrichtung (10) beteiligt ist.

23. Verfahren nach Anspruch 22, **dadurch gekennzeichnet, dass** die erste Ventileinrichtung (16) in einem ersten Schaltzustand den Energiesparsteuerausgang (28) entlüftet und in einem zweiten Schaltzustand den Energiesparsteuerausgang belüftet, und dass ein mit dem Energiesparsteuerausgang (28) gekoppelter Kompressor durch Belüften des Energiesparsteuerausgangs in einen Energiesparzustand überführbar ist.

24. Verfahren nach Anspruch 22 oder 23, **dadurch gekennzeichnet, dass** die zweite Ventileinrichtung (18) in einem ersten Schaltzustand einen Steuereingang (30) der Ablassventileinrichtung (20) und einen Steuereingang (30) der Förderleitungsabsperrventileinrichtung (22) entlüftet sowie einen Regenerationsluftpfad sperrt und in einem zweiten Schaltzustand den Steuereingang (30) der Ablassventileinrichtung (20) und den Steuereingang (32) der Förderleitungsabsperrventileinrichtung (22) belüftet sowie den Regenerationsluftpfad freigibt und dass die Ablassventileinrichtung (20) bei entlüftetem Steuereingang (30) geschlossen und bei belüftetem Steuereingang geöffnet sowie die Förderleitungsabsperrrentileinrichtung (22) bei entlüftetem Steuereingang (32) geöffnet und bei belüftetem Steuereingang geschlossen sind.

25. Verfahren nach Anspruch 24, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein Förderbetriebszustand vorliegt.

26. Verfahren nach Anspruch 24 oder 25, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Regenerationsbetriebszustand vorliegt.

27. Verfahren nach einem der Ansprüche 24 bis 26, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Sperrbetriebszustand mit geöffneter Förderleitungsabsperrventileinrichtung (22) vorliegt.

28. Verfahren nach Anspruch 22, **dadurch gekennzeichnet, dass** die erste Ventileinrichtung (16) in einem ersten Schaltzustand den Energiesparsteuerausgang (28) entlüftet und einen ersten Steuereingang (34) der Förderleitungsabsperrventileinrichtung (22) entlüftet und in einem zweiten Schaltzustand den Energiesparsteuerausgang (28) belüftet und den ersten Steuereingang (34) der Förderleitungsabsperrventileinrichtung (22) belüftet und dass ein mit dem Energiesparsteuerausgang (28) gekoppelter Kompressor durch Belüften des Energiesparsteuerausgangs in einen Energiesparzustand überführbar ist sowie die Förderleitungsabsperrventileinrichtung bei entlüftetem ersten Steuereingang (34) geöffnet und bei belüftetem ersten Steuereingang bedingt geschlossen ist.

29. Verfahren nach Anspruch 22 oder 28, **dadurch gekennzeichnet, dass** die zweite Ventileinrichtung (18) in einem ersten Schaltzustand einen Steuereingang (30) der Ablassventileinrichtung (20) entlüftet sowie einen Regenerationsluftpfad sperrt und in einem zweiten Schaltzustand den Steuereingang (30) der Ablassventileinrichtung (20) belüftet sowie den Regenerationsluftpfad freigibt und dass die Ablassventileinrichtung (20) bei entlüftetem Steuereingang (30) geschlossen und bei belüftetem Steuereingang geöffnet ist.

30. Verfahren nach Anspruch 29, **dadurch gekennzeichnet, dass** in einem ersten Betriebszustand der Druckluftversorgungseinrichtung die erste Ventileinrichtung (16) ihren ersten Schaltzustand einnimmt und die zweite Ventileinrichtung (18) ihren ersten Schaltzustand einnimmt, wodurch ein Förderbetriebszustand vorliegt.

31. Verfahren nach Anspruch 29 oder 30, **dadurch gekennzeichnet, dass** in einem zweiten Betriebszustand der Druckluftversorgungseinrichtung die erste Ventileinrichtung (16) ihren zweiten Schaltzustand einnimmt und die zweite Ventileinrichtung (18) ihren zweiten Schaltzustand einnimmt, wodurch ein Regenerationsbetriebszustand vorliegt.

32. Verfahren nach einem der Ansprüche 29 bis 31, **dadurch gekennzeichnet, dass** in einem dritten Betriebszustand der Druckluftversorgungseinrichtung die erste Ventileinrichtung (16) ihren zweiten Schaltzustand einnimmt und die zweite Ventileinrichtung (18) ihren ersten Schaltzustand einnimmt, wodurch ein Sperrbetriebszustand vorliegt.

33. Verfahren nach Anspruch 32, **dadurch gekennzeichnet, dass** eine dritte Ventileinrichtung (38) vorgesehen ist, die in einem ersten Schaltzustand einen zweiten Steuereingang (36) der Förderleitungsabsperrventileinrichtung (22) entlüftet und in einem zweiten Schaltzustand den zweiten Steuereingang (36) der Förderleitungsabsperrventileinrichtung (22) belüftet, und dass die Förderteitungsabsperrventileinrichtung (22) bei belüftetem zweiten Steuereingang (36) geöffnet ist, auch wenn der erste Steuereingang (34) der Förderleitungsabsperrventileinrichtung (22) belüftet ist, so dass der Sperrbetriebszustand bei einer dritten Ventileinrichtung (38) im ersten Schaltzustand mit geschlossener und im zweiten Schaltzustand mit geöffneter Förderleitungsabsperrventileinrichtung (22) vorliegt.

34. Verfahren nach einem der Ansprüche 29 bis 33, **dadurch gekennzeichnet, dass** in einem vierten Betriebszustand der Druckluftversorgungseinrichtung die erste Ventileinrichtung (16) ihren ersten Schaltzustand einnimmt und die zweite Ventileinrichtung (18) ihren zweiten Schaltzustand einnimmt, wodurch ein Spülbetriebszustand vorliegt.

35. Verfahren nach Anspruch 33 oder 34, **dadurch gekennzeichnet, dass** die dritte Ventileinrichtung (18) mit einer Steuerleitung (40) gekoppelt ist, über die weitere Steuerfunktionen in der Druckluftversorgungseinrichtung realisierbar sind.

36. Verfahren nach Anspruch 35, **dadurch gekennzeichnet, dass** die Steuerleitung mit einem Steuereingang (42) eines einen Verbraucherkreis versorgenden Überströmventils (44) verbunden ist.

37. Verfahren nach Anspruch 36, **dadurch gekennzeichnet, dass** durch Belüften des Steuereingangs (42) ein Öffnen des Überströmventils (44) unterstützt wird.

38. Verfahren nach Anspruch 36, **dadurch gekennzeichnet, dass** durch Belüften des Steuereingangs ein geschlossener Zustand des Überströmventils herbeigeführt und aufrechterhalten wird.

39. Verfahren nach einem der Ansprüche 22 bis 38, **dadurch gekennzeichnet, dass** die Ventileinrichtungen (16, 18, 38) durch eine elektronische Steuereinheit (12) angesteuert werden.

## Claims

1. A compressed air supply system (10) for a utility vehicle, said system comprising
- a compressed air inlet (26) that can be coupled to a compressor,
- a filter unit (14) that is coupled to the compressed air inlet (26) via a delivery line,
- a discharge valve element (20) that is coupled to a discharge outlet (24) and the delivery line,
- an energy saving control outlet (28) that can be coupled to a control inlet of the compressor,
- a delivery line shut-off valve element (22) interposed between the compressor and the filter unit (14),
- a first valve element (16) and a second valve element (18), the discharge valve element (20), the energy saving control outlet (28), the regeneration of the filter unit (14) and the delivery line shut-off valve element (22) being controllable by the valve elements (16, 18),
**characterized**
- **in that** the energy saving control outlet (28) can be controlled by the first valve element (16), and the discharge valve element (20) and the regeneration of the filter unit (14) can be controlled by the second valve element (18), and
- **in that** the delivery line shut-off valve element (22) is closed during the regeneration phase of the filter unit (14) and can be transferred to an opened control state outside the regeneration phase when the discharge valve element (20) is closed and the energy saving control outlet (28) is supplied with air, and
- **in that** the compressed air supply system (10) comprises a third valve element (38) which takes part in the control of operating states of the compressed air supply system (10).

2. The compressed air supply system (10) as claimed in claim 1, **characterized in that**, in a first control state, the first valve element (16) vents the energy saving control outlet (28), and, in a second control state, supplies the energy saving control outlet with air, and **in that** a compressor coupled to the energy saving control outlet (28) can be transferred to an energy saving state by supplying the energy saving control outlet with air.

3. The compressed air supply system (10) as claimed in claim 1 or 2, **characterized in that**, in a first control state, the second valve element (18) vents a control inlet (30) of the discharge valve element (20) and a control inlet (32) of the delivery line shut-off valve element (22), and blocks a regeneration air path, and, in a second control state, supplies air to the control inlet (30) of the discharge valve element (20) and the control inlet (32) of the delivery line shut-off valve element (22) and opens the regeneration air path, and **in that** the discharge valve element (20) is closed when the control inlet (30) is vented and open when the control inlet is supplied with air, and the delivery line shut-off valve element (22) is open when the control inlet (32) is vented and closed when the control inlet is supplied with air.

4. The compressed air supply system (10) as claimed in claim 3, **characterized in that**, in a first operating state of the compressed air supply system, the first valve element (16) assumes its first control state and the second valve element (18) assumes its first control state, resulting in an operating state for delivery.

5. The compressed air supply system (10) as claimed in claim 3 or 4, **characterized in that**, in a second operating state of the compressed air supply system, the first valve element (16) assumes its second control state and the second valve element (18) assumes its second control state, resulting in an operating state for regeneration.

6. The compressed air supply system (10) as claimed in one of claims 3 to 5, **characterized in that**, in a third operating state of the compressed air supply system, the first valve element (16) assumes its second control state and the second valve element (18) assumes its first control state, resulting in a blocking operating state with an open delivery line shut-off valve element (22).

7. The compressed air supply system (10) as claimed in claim 1, **characterized in that**, in a first control state, the first valve element (16) vents the energy saving control outlet (28), and vents a first control inlet (34) of the delivery line shut-off valve element (22), and, in a second control state, supplies the energy saving control outlet (28) with air and supplies the first control inlet (34) of the delivery line shut-off valve element (22) with air, and **in that** a compressor coupled to the energy saving control outlet (28) can be transferred to an energy saving state by supplying the energy saving control outlet with air, and the delivery line shut-off valve element (22) is open when the first control inlet (34) is vented and is closed under certain conditions when the first control inlet is supplied with air.

8. The compressed air supply system (10) as claimed in claim 1 or 7, **characterized in that**, in a first control state, the second valve element (18) vents a control inlet (30) of the discharge valve element (20) and blocks a regeneration air path, and, in a second control state, supplies the control inlet (30) of the discharge valve element (20) with air and opens the regeneration air path, and **in that** the discharge valve element (20) is closed when the control inlet (30) is vented and is opened when the control inlet is supplied with air.

9. The compressed air supply system (10) as claimed in claim 8, **characterized in that**, in a first operating state of the compressed air supply system, the first valve element (16) assumes its first control state and the second valve element (18) assumes its first control state, resulting in an operating state for delivery.

10. The compressed air supply system (10) as claimed in claim 8 or 9, **characterized in that**, in a second operating state of the compressed air supply system, the first valve element (16) assumes its second control state and the second valve element (18) assumes its second control state, resulting in an operating state for regeneration.

11. The compressed air supply system (10) as claimed in one of claims 8 to 10, **characterized in that**, in a third operating state of the compressed air supply system, the first valve element (16) assumes its second control state and the second valve element (18) assumes its first control state, resulting in a blocking operating state.

12. The compressed air supply system (10) as claimed in claim 11, **characterized in that** a third valve element (38) is provided which, in a first control state, vents a second control inlet (36) of the delivery line shut-off valve element (22) and, in a second control state, supplies the second control inlet (36) of the delivery line shut-off valve element (22) with air, and **in that** the delivery line shut-off valve element (22) is open when the second control inlet (36) is supplied with air, even if the first control inlet (34) of the delivery line shut-off valve element (22) is supplied with air, with the result that, in the case of a third valve element (38), the system is in the blocking operating state with the delivery line shut-off valve element (22) closed in the first control state and open in the second control state.

13. The compressed air supply system (10) as claimed in one of claims 8 to 12, **characterized in that**, in a fourth operating state of the compressed air supply system, the first valve element (16) assumes its first control state and the second valve element (18) assumes its second control state, resulting in an operating state for purging.

14. The compressed air supply system (10) as claimed in claim 12 or 13, **characterized in that** the third valve element (18) is coupled to a control line (40), via which further control functions can be implemented in the compressed air supply system.

15. The compressed air supply system (10) as claimed in claim 14, **characterized in that** the control line is connected to a control inlet (42) of an overflow valve (44) which supplies a consumer circuit.

16. The compressed air supply system (10) as claimed in claim 15, **characterized in that** opening of the overflow valve (44) is assisted by supplying air to the control inlet (42).

17. The compressed air supply system (10) as claimed in claim 15, **characterized in that** a closed state of the overflow valve is brought about and maintained by supplying air to the control inlet.

18. The compressed air supply system (10) as claimed in one of the preceding claims, **characterized in that** the valve elements (16, 18, 38) are 3/2-way valves.

19. The compressed air supply system (10) as claimed in one of the preceding claims, **characterized in that** an electronic control unit (12) is provided, and **in that** the valve elements (16, 18) are solenoid valves.

20. The compressed air supply system (10) as claimed in one of the preceding claims, **characterized in that** the discharge valve element (20) is a 2/2-way valve.

21. The compressed air supply system (10) as claimed in one of the preceding claims, **characterized in that** the delivery line shut-off valve element (22) is a 2/2-way valve.

22. A method for operating a compressed air supply system (10), said system comprising a compressed air inlet (26) that can be coupled to a compressor, a filter unit (14) that is coupled to the compressed air inlet (26) via a delivery line, a discharge valve element (20) that is coupled to a discharge outlet (24) and the delivery line, an energy saving control outlet (28) that can be coupled to a control inlet of the compressor, a delivery line shut-off valve element (22) interposed between the compressor and the filter unit (14), a first valve element (16) and a second valve element (18), provision being made within the scope of the invention for the discharge valve element (20), the energy saving control outlet (28), the regeneration of the filter unit (14) and the delivery line shut-off valve element (22) to be controlled by the valve elements (16, 18), **characterized**
- **in that** the energy saving control outlet (28) is controlled by the first valve element (16), and the discharge valve element (20) and the regeneration of the filter unit (14) are controlled by the second valve element (18), and
- **in that** the delivery line shut-off valve element (22) is closed during the regeneration phase of the filter unit (14) and is transferred to an opened control state when not in the regeneration phase and when the discharge valve element (20) is closed and the energy saving control outlet (28) is supplied with air, and
- **in that** the compressed air supply system (10) comprises a third valve element (38) which takes part in the control of operating states of the compressed air supply system (10).

23. The method as claimed in claim 22, **characterized in that** the first valve element (16) vents the energy saving control outlet (28) in a first control state and supplies the energy saving control outlet with air in a second control state, and **in that** a compressor coupled to the energy saving control outlet (28) can be transferred to an energy saving state by supplying the energy saving control outlet with air.

24. The method as claimed in claim 22 or 23, **characterized in that**, in a first control state, the second valve element (18) vents a control inlet (30) of the discharge valve element (20) and a control inlet (30) of the delivery line shut-off valve element (22) and blocks a regeneration air path and, in a second control state, supplies the control inlet (30) of the discharge valve element (20) and the control inlet (32) of the delivery line shut-off valve element (22) with air and opens the regeneration air path, and **in that** the discharge valve element (20) is closed when the control inlet (30) is vented and is opened when the control inlet is supplied with air, and the delivery line shut-off valve element (22) is opened when the control inlet (32) is vented and closed when the control inlet is supplied with air.

25. The method as claimed in claim 24, **characterized in that**, in a first operating state of the compressed air supply system, the first valve element (16) assumes its first control state and the second valve element (18) assumes its first control state, resulting in an operating state for delivery.

26. The method as claimed in claim 24 or 25, **characterized in that**, in a second operating state of the compressed air supply system, the first valve element (16) assumes its second control state and the second valve element (18) assumes its second control state, resulting in an operating state for regeneration.

27. The method as claimed in one of claims 24 to 26, **characterized in that**, in a third operating state of the compressed air supply system, the first valve element (16) assumes its second control state and the second valve element (18) assumes its first control state, resulting in a blocking operating state with the delivery line shut-off valve element (22) open.

28. The method as claimed in claim 22, **characterized in that**, in a first control state, the first valve element (16) vents the energy saving control outlet (28), and vents a first control inlet (34) of the delivery line shut-off valve element (22), and, in a second control state, supplies the energy saving control outlet (28) with air and supplies the first control inlet (34) of the delivery line shut-off valve element (22) with air, and **in that** a compressor coupled to the energy saving control outlet (28) can be transferred to an energy saving state by supplying the energy saving control outlet with air, and the delivery line shut-off valve element is open when the first control inlet (34) is vented and is closed under certain conditions when the first control inlet is supplied with air.

29. The method as claimed in claim 22 or 28, **characterized in that**, in a first control state, the second valve element (18) vents a control inlet (30) of the discharge valve element (20) and blocks a regeneration air path, and, in a second control state, supplies the control inlet (30) of the discharge valve element (20) with air and opens the regeneration air path, and **in that** the discharge valve element (20) is closed when the control inlet (30) is vented and is opened when the control inlet is supplied with air.

30. The method as claimed in claim 29, **characterized in that**, in a first operating state of the compressed air supply system, the first valve element (16) assumes its first control state and the second valve element (18) assumes its first control state, resulting in an operating state for delivery.

31. The method as claimed in claim 29 or 30, **characterized in that**, in a second operating state of the compressed air supply system, the first valve element (16) assumes its second control state and the second valve element (18) assumes its second control state, resulting in an operating state for regeneration.

32. The method as claimed in one of claims 29 to 31, **characterized in that**, in a third operating state of the compressed air supply system, the first valve element (16) assumes its second control state and the second valve element (18) assumes its first control state, resulting in a blocking operating state.

33. The method as claimed in claim 32, **characterized in that** a third valve element (38) is provided which, in a first control state, vents a second control inlet (36) of the delivery line shut-off valve element (22) and, in a second control state, supplies the second control inlet (36) of the delivery line shut-off valve element (22) with air, and **in that** the delivery line shut-off valve element (22) is open when the second control inlet (36) is supplied with air, even if the first control inlet (34) of the delivery line shut-off valve element (22) is supplied with air, with the result that, in the case of a third valve element (38), the system is in the blocking operating state with the delivery line shut-off valve element (22) closed in the first control state and open in the second control state.

34. The method as claimed in one of claims 29 to 33, **characterized in that**, in a fourth operating state of the compressed air supply system, the first valve element (16) assumes its first control state and the second valve element (18) assumes its second control state, resulting in an operating state for purging.

35. The method as claimed in claim 33 or 34, **characterized in that** the third valve element (18) is coupled to a control line (40), via which further control functions can be implemented in the compressed air supply system.

36. The method as claimed in claim 35, **characterized in that** the control line is connected to a control inlet (42) of an overflow valve (44) which supplies a consumer circuit.

37. The method as claimed in claim 36, **characterized in that** opening of the overflow valve (44) is assisted by supplying air to the control inlet (42).

38. The method as claimed in claim 36, **characterized in that** a closed state of the overflow valve is brought about and maintained by supplying air to the control inlet.

39. The method as claimed in one of claims 22 to 38, **characterized in that** the valve elements (16, 18, 38) are activated by an electronic control unit (12).

## Revendications

1. Dispositif (10) d'alimentation en air comprimé pour un véhicule utilitaire, comprenant
- une entrée (26) pour de l'air comprimé pouvant être reliée à un compresseur,
- une unité (14) de filtre pouvant être reliée à l'entrée (26) pour de l'air comprimé par un conduit de transport,
- un dispositif (20) de vanne d'évacuation relié à une sortie (24) d'évacuation et au conduit de transport,
- une sortie (28) de commande d'économie d'énergie pouvant être reliée à une entrée de commande du compresseur,
- un dispositif (22) de vanne d'arrêt du conduit de transport, monté entre le compresseur et l'unité (14) de filtre et
- un premier dispositif (16) de vanne, ainsi qu'un deuxième dispositif (18) de vanne, dans lequel, par les dispositifs (16, 18) de vanne, le dispositif (20) de vanne d'évacuation, la sortie (28) de commande d'économie d'énergie, la régénération de l'unité (14) de filtre et le dispositif (22) de vanne d'arrêt du conduit de transport peuvent être commandés,
**caractérisé**
- **en ce que**, par le premier dispositif (16) de vanne, par la sortie (28) de commande d'économie d'énergie et par le deuxième dispositif (18) de vanne, le dispositif (20) de vanne d'évacuation et la régénération de l'unité (14) de filtre peuvent être commandés et
- **en ce que** le dispositif (22) de vanne d'arrêt du conduit de transport est fermé pendant la phase de régénération de l'unité (14) de filtre et, en-dehors de la phase de régénération, alors que le dispositif (20) de vanne d'évacuation est fermé et que la sortie (28) de commande d'économie d'énergie est alimentée en air, il peut être mis dans un état de commutation ouvert et
- **en ce que** le dispositif (10) d'alimentation en air comprimé comprend un troisième dispositif (38) de vanne, qui fait partie d'une commande d'états de fonctionnement du dispositif (10) d'alimentation en air comprimé.

2. Dispositif (10) d'alimentation en air comprimé suivant la revendication 1, **caractérisé en ce que** le premier dispositif (16) de vanne met, dans un premier état de commutation, la sortie (28) de commande d'économie d'énergie à l'atmosphère et, dans un deuxième état de commutation, alimente la sortie de commande d'économie d'énergie et **en ce qu'**un compresseur relié à la sortie (28) de commande d'économie d'énergie peut être mis dans un état d'économie d'énergie par l'alimentation en air de la sortie de commande d'économie d'énergie.

3. Dispositif (10) d'alimentation en air comprimé suivant la revendication 1 ou 2, **caractérisé en ce que** le deuxième dispositif (18) de vanne met, dans un premier état de commutation, à l'atmosphère une entrée (30) de commande du dispositif (20) de vanne d'évacuation et une entrée (32) de commande du dispositif (22) de vanne d'arrêt du conduit de transport, ainsi que ferme un trajet d'air de régénération et, dans un deuxième état de commutation, alimente en air l'entrée (30) de commande du dispositif (20) de vanne d'évacuation et l'entrée (32) de commande du dispositif (22) de vanne d'arrêt du conduit de transport, ainsi que libère le trajet d'air de régénération et **en ce que** le dispositif (20) de vanne d'évacuation est fermé, lorsque l'entrée (30) de commande est mise à l'atmosphère, et est ouvert, lorsque l'entrée de commande est alimentée en air, tandis que le dispositif (22) de vanne d'arrêt du conduit de transport est ouvert, lorsque l'entrée (32) de commande est mise à l'atmosphère, et est fermé, lorsque l'entrée de commande est alimentée en air.

4. Dispositif (10) d'alimentation en air comprimé suivant la revendication 3, **caractérisé en ce que**, dans un premier état de fonctionnement du dispositif d'alimentation en air comprimé, le premier dispositif (16) de vanne prend son premier état de commutation et le deuxième dispositif de vanne prend son premier état de commutation, de sorte qu'il règne un état de fonctionnement de transport.

5. Dispositif (10) d'alimentation en air comprimé suivant la revendication 3 ou 4, **caractérisé en ce que**, dans un deuxième état de fonctionnement du dispositif d'alimentation en air comprimé, le premier dispositif (16) de vanne prend son deuxième état de commutation et le deuxième dispositif (18) de vanne prend son deuxième état de commutation, de sorte qu'il règne un état de fonctionnement en régénération.

6. Dispositif (10) d'alimentation en air comprimé suivant l'une des revendications 3 à 5, **caractérisé en ce que**, dans un troisième état de fonctionnement du dispositif d'alimentation en air comprimé, le premier dispositif (16) de vanne prend son deuxième état de commutation et le deuxième dispositif (18) de vanne prend son premier état de commutation, de sorte qu'il règne un état de fonctionnement d'arrêt avec le dispositif (22) de vanne d'arrêt du conduit de transport qui est ouvert.

7. Dispositif (10) d'alimentation en air comprimé suivant la revendication 1, **caractérisé en ce que** le premier dispositif (16) de vanne met, dans un premier état de commutation, la sortie (28) de commande d'économie d'énergie à l'atmosphère et met une première entrée (34) de commande du dispositif (22) de vanne d'arrêt du conduit de transport à l'atmosphère et, dans un deuxième état de commutation, alimente en air la sortie (28) de commande d'économie d'énergie et alimente en air la première entrée (34) de commande du dispositif (22) de vanne d'arrêt du conduit de transport et **en ce qu'**un compresseur relié à la sortie (28) de commande d'économie d'énergie peut être mis par l'alimentation en air de la sortie de commande d'économie d'énergie dans un état d'économie d'énergie, tandis que le dispositif (22) de vanne d'arrêt du conduit de transport est ouvert, lorsque la première entrée (34) de commande est mise à l'atmosphère, et est fermé conditionnellement, lorsque la première entrée de commande est alimentée en air.

8. Dispositif (10) d'alimentation en air comprimé suivant la revendication 1 ou 7, **caractérisé en ce que** le deuxième dispositif (18) de vanne met, dans un premier état de commutation, une entrée (30) de commande du dispositif (20) de vanne d'évacuation à l'atmosphère, ainsi que ferme le trajet d'air de régénération et, dans un deuxième état de commutation, alimente en air l'entrée (30) de commande du dispositif (20) de vanne d'évacuation, ainsi que libère le trajet d'air de régénération et **en ce que** le dispositif (20) de vanne d'évacuation est fermé, lorsque l'entrée (30) de commande est mise à l'atmosphère, et est ouvert, lorsque l'entrée de commande est alimentée en air.

9. Dispositif (10) d'alimentation en air comprimé suivant la revendication 8, **caractérisé en ce que**, dans un premier état de fonctionnement du dispositif d'alimentation en air comprimé, le premier dispositif (16) de vanne prend son premier état de commutation et le deuxième dispositif (18) de vanne prend son premier état de commutation, de sorte qu'il règne un état de fonctionnement de transport.

10. Dispositif (10) d'alimentation en air comprimé suivant la revendication 8 ou 9, **caractérisé en ce que**, dans un deuxième état de fonctionnement du dispositif d'alimentation en air comprimé, le premier dispositif (16) de vanne prend son deuxième état de commutation et le deuxième dispositif (18) de vanne prend son deuxième état de commutation, de sorte qu'il règne un état de fonctionnement en régénération.

11. Dispositif (10) d'alimentation en air comprimé suivant l'une des revendications 8 à 10, **caractérisé en ce que**, dans un troisième état de fonctionnement du dispositif d'alimentation en air comprimé, le premier dispositif (16) de vanne prend son deuxième état de fonctionnement et le deuxième dispositif (18) de vanne prend son premier état de fonctionnement, de sorte qu'il règne un état de fonctionnement fermé.

12. Dispositif (10) d'alimentation en air comprimé suivant la revendication 11, **caractérisé en ce qu'**il est prévu un troisième dispositif (38) de vanne, qui, dans un premier état de commutation, met une deuxième entrée (36) de commande du dispositif (22) de vanne d'arrêt du conduit de transport à l'atmosphère et, dans un deuxième état de commutation, alimente en air la deuxième entrée (36) de commande du dispositif (22) de vanne d'arrêt du conduit de transport et **en ce que** le dispositif (22) de vanne d'arrêt du conduit de transport est ouvert, lorsque la deuxième entrée (36) de commande est alimentée en air, même si la première entrée (34) de commande du dispositif (22) de vanne d'arrêt du conduit de transport est alimentée en air, de sorte que l'état de fonctionnement fermé règne pour un troisième dispositif (38) de vanne, dans le premier état de commutation, avec un dispositif (22) de vanne d'arrêt du conduit de transport fermé et, dans le deuxième état de commutation, avec un dispositif (22) de vanne d'arrêt du conduit de transport ouvert.

13. Dispositif (10) d'alimentation en air comprimé suivant l'une des revendications 8 à 12, **caractérisé en ce que**, dans un quatrième état de fonctionnement du dispositif d'alimentation en air comprimé, le premier dispositif (16) de vanne prend son premier état de fonctionnement et le deuxième dispositif (18) de vanne prend son deuxième état de fonctionnement, de manière à ce qu'il règne un état de fonctionnement en lavage.

14. Dispositif (10) d'alimentation en air comprimé suivant la revendication 12 ou 13, **caractérisé en ce que** le troisième dispositif (18) de vanne est relié à un conduit (40) de commande, par lequel les autres fonctions de commande peuvent être réalisées dans le dispositif d'alimentation en air comprimé.

15. Dispositif (10) d'alimentation en air comprimé suivant la revendication 14, **caractérisé en ce que** le conduit de commande est relié à une entrée (42) de commande d'une vanne (44) de décharge alimentant un circuit d'utilisateur.

16. Dispositif (10) d'alimentation en air comprimé suivant la revendication 15, **caractérisé en ce que**, en alimentant en air l'entrée (42) de commande, on favorise une ouverture de la vanne (44) de décharge.

17. Dispositif (10) d'alimentation en air comprimé suivant la revendication 15, **caractérisé en ce que**, en alimentant en air l'entrée de commande, on provoque et on maintient un état fermé de la vanne de décharge.

18. Dispositif (10) d'alimentation en air comprimé suivant l'une des revendications précédentes, **caractérisé en ce que** les dispositifs (16, 18, 38) de vanne sont des vannes à 3/2 voies.

19. Dispositif (10) d'alimentation en air comprimé suivant l'une des revendications précédentes, **caractérisé en ce qu'**il est prévu une unité (12) électronique de commande et **en ce que** les dispositifs (16, 18) de vanne sont des électrovannes.

20. Dispositif (10) d'alimentation en air comprimé suivant l'une des revendications précédentes, **caractérisé en ce que** le dispositif (20) de vanne d'évacuation est une vanne à 2/2 voies.

21. Dispositif (10) d'alimentation en air comprimé suivant l'une des revendications précédentes, **caractérisé en ce que** le dispositif (22) de vanne d'arrêt du conduit de transport est une vanne à 2/2 voies.

22. Procédé pour faire fonctionner un dispositif (10) d'alimentation en air comprimé, comprenant une entrée (26) pour de l'air comprimé, qui peut être reliée à un compresseur, une unité (14) de filtre, qui peut être reliée à l'entrée (26) pour de l'air comprimé par un conduit de transport, un dispositif (20) de vanne d'évacuation, qui est relié à une sortie (24) d'évacuation et au conduit de transport, une sortie (28) de commande d'économie d'énergie, qui peut être reliée à une entrée de commande du compresseur, un dispositif (22) de vanne d'arrêt du conduit de transport, monté entre le compresseur et l'unité (14) de filtre et un premier dispositif (16) de vanne ainsi qu'un deuxième dispositif (18) de vanne, dans lequel il est prévu, dans le cadre du procédé, de commander par les dispositifs (16, 18) de vanne, par le dispositif (20) de vanne d'évacuation, la sortie (28) de commande d'économie d'énergie la régénération de l'unité (14) de filtre et le dispositif (22) de vanne d'arrêt du conduit de transport, **caractérisé**
- **en ce que** l'on commande, par le premier dispositif (16) de vanne, la sortie (28) de commande d'économie d'énergie et, par le deuxième dispositif (18) de vanne, le dispositif (20) de vanne d'évacuation et la régénération de l'unité (14) de filtre et
- **en ce que** le dispositif (22) de vanne d'arrêt du conduit de transport est fermé pendant la phase de régénération de l'unité (14) de filtre et, en-dehors de la phase de régénération, alors que le dispositif (20) de vanne d'évacuation est fermé et que la sortie (28) de commande d'économie d'énergie est mise à l'atmosphère, passe dans un état de commutation ouvert et
- **en ce que** le dispositif (10) d'alimentation en air comprimé comprend un troisième dispositif (38) de vanne, qui fait partie d'une commande d'état de fonctionnement du dispositif (10) d'alimentation en air comprimé.

23. Procédé suivant la revendication 22, **caractérisé en ce que** le premier dispositif (16) de vanne met, dans un premier état de commutation, la sortie (28) de commande d'économie d'énergie à l'atmosphère et, dans un deuxième état de commutation, alimente en air la sortie de commande d'économie d'énergie et **en ce qu'**un compresseur relié à la sortie (28) de commande d'économie d'énergie peut passer dans un état d'économie d'énergie par alimentation en air de la sortie de commande d'énergie.

24. Procédé suivant la revendication 22 ou 23, **caractérisé en ce que** le deuxième dispositif (18) de vanne met, dans un premier état de commutation, une entrée (30) de commande du dispositif (20) de vanne d'évacuation et une entrée (30) de commande du dispositif (22) de vanne d'arrêt du conduit de transport à l'atmosphère, ainsi que ferme un trajet d'air de régénération et, dans un deuxième état de commutation, alimente en air l'entrée (30) de commande du dispositif (20) de vanne d'évacuation et l'entrée (32) de commande du dispositif (22) de vanne d'arrêt du conduit de transport, ainsi que libère le trajet d'air de régénération, et **en ce que** le dispositif (20) de vanne d'évacuation est fermé, lorsque l'entrée (30) de commande est mise à l'atmosphère, et est ouvert, lorsque l'entrée de commande est alimentée en air, tandis que le dispositif (22) de vanne d'arrêt du conduit de transport est ouvert, lorsque l'entrée (32) de commande est mise à l'atmosphère, et est fermé, lorsque l'entrée de commandé est alimentée en air.

25. Procédé suivant la revendication 24, **caractérisé en ce que**, dans un premier état de fonctionnement du dispositif d'alimentation en air comprimé, le premier dispositif (16) de vanne prend son premier état de commutation et le deuxième dispositif (18) de vanne prend son premier état de commutation, de sorte qu'il règne un état de fonctionnement de transport.

26. Procédé suivant la revendication 24 ou 25, **caractérisé en ce que**, dans un deuxième état de fonctionnement du dispositif d'alimentation en air comprimé, le premier dispositif (16) de vanne prend son deuxième état de commutation et le deuxième dispositif (18) de vanne prend son deuxième état de commutation, de sorte qu'il règne un état de fonctionnement en régénération.

27. Procédé suivant l'une des revendications 24 à 26, **caractérisé en ce que**, dans un troisième état de fonctionnement du dispositif d'alimentation en air comprimé, le premier dispositif (16) de vanne prend son deuxième état de commutation et le deuxième dispositif (18) de vanne prend son premier état de commutation, de sorte qu'il règne un état de fonctionnement d'arrêt avec le dispositif (22) de vanne d'arrêt du conduit de transport qui est ouvert.

28. Procédé suivant la revendication 22, **caractérisé en ce que** le premier dispositif (16) de vanne met, dans un premier état de commutation, la sortie (28) de commande d'économie d'énergie à l'atmosphère et met une première entrée (34) de commande du dispositif (22) de vanne d'arrêt du conduit de transport à l'atmosphère et, dans un deuxième état de commutation, alimente en air la sortie (28) de commande d'économie d'énergie et alimente en air la première entrée (34) de commande du dispositif (22) de vanne d'arrêt du conduit de transport et **en ce qu'**un compresseur relié à la sortie (28) de commande d'économie d'énergie peut être mis par l'alimentation en air de la sortie de commande d'économie d'énergie dans un état d'économie d'énergie, tandis que le dispositif (22) de vanne d'arrêt du conduit de transport est ouvert, lorsque la première entrée (34) de commande est mise à l'atmosphère, et est fermé conditionnellement, lorsque la première entrée de commande est alimentée en air.

29. Procédé suivant la revendication 22 ou 28, **caractérisé en ce que** le deuxième dispositif (18) de vanne met, dans un premier état de commutation, une entrée (30) de commande du dispositif (20) de vanne d'évacuation à l'atmosphère, ainsi que ferme le trajet d'air de régénération et, dans un deuxième état de commutation, alimente en air l'entrée (30) de commande du dispositif (20) de vanne d'évacuation, ainsi que libère le trajet d'air de régénération et **en ce que** le dispositif (20) de vanne d'évacuation est fermé, lorsque l'entrée (30) de commande est mise à l'atmosphère, et est ouvert, lorsque l'entrée de commande est alimentée en air.

30. Procédé suivant la revendication 29, **caractérisé en ce que**, dans un premier état de fonctionnement du dispositif d'alimentation en air comprimé, le premier dispositif (16) de vanne prend son premier état de commutation et le deuxième dispositif (18) de vanne prend son premier état de commutation, de sorte qu'il règne un état de fonctionnement de transport.

31. Procédé suivant la revendication 29 ou 30, **caractérisé en ce que**, dans un deuxième état de fonctionnement du dispositif d'alimentation en air comprimé, le premier dispositif (16) de vanne prend son deuxième état de commutation et le deuxième dispositif (18) de vanne prend son deuxième état de commutation, de sorte qu'il règne un état de fonctionnement en régénération.

32. Procédé suivant l'une des revendications 29 à 31, **caractérisé en ce que**, dans un troisième état de fonctionnement du dispositif d'alimentation en air comprimé, le premier dispositif (16) de vanne prend son deuxième état de fonctionnement et le deuxième dispositif (18) de vanne prend son premier état de fonctionnement, de sorte qu'il règne un état de fonctionnement fermé.

33. Procédé suivant la revendication 32, **caractérisé en ce qu'**il est prévu un troisième dispositif (38) de vanne, qui, dans un premier état de commutation, met une deuxième entrée (36) de commande du dispositif (22) de vanne d'arrêt du conduit de transport à l'atmosphère et, dans un deuxième état de commutation, alimente en air la deuxième entrée (36) de commande du dispositif (22) de vanne d'arrêt du conduit de transport et **en ce que** le dispositif (22) de vanne d'arrêt du conduit de transport est ouvert, lorsque la deuxième entrée (36) de commande est alimentée en air, même si la première entrée (34) de commande du dispositif (22) de vanne d'arrêt du conduit de transport est alimentée en air, de sorte que l'état de fonctionnement fermé règne pour un troisième dispositif (38) de vanne, dans le premier état de commutation, avec un dispositif (22) de vanne d'arrêt du conduit de transport fermé et, dans le deuxième état de commutation, avec un dispositif (22) de vanne d'arrêt du conduit de transport ouvert.

34. Procédé suivant l'une des revendications 29 à 33, **caractérisé en ce que**, dans un quatrième état de fonctionnement du dispositif d'alimentation en air comprimé, le premier dispositif (16) de vanne prend son premier état de fonctionnement et le deuxième dispositif (18) de vanne prend son deuxième état de fonctionnement, de manière à ce qu'il règne un état de fonctionnement en lavage.

35. Procédé suivant la revendication 33 ou 34, **caractérisé en ce que** le troisième dispositif (18) de vanne est relié à un conduit (40) de commande, par lequel les autres fonctions de commande peuvent être réalisées dans le dispositif d'alimentation en air comprimé.

36. Procédé suivant la revendication 35, **caractérisé en ce que** le conduit de commande est relié à une entrée (42) de commande d'une vanne (44) de décharge alimentant un circuit d'utilisateur.

37. Procédé suivant la revendication 36, **caractérisé en ce que**, en alimentant en air l'entrée (42) de commande, on favorise une ouverture de la vanne (44) de décharge.

38. Procédé suivant la revendication 36, **caractérisé en ce que**, en alimentant en air l'entrée de commande, on provoque et on maintient un état fermé de la vanne de décharge.

39. Procédé suivant l'une des revendications 22 à 38, **caractérisé en ce que** les dispositifs (16, 18, 38) de vanne sont commandés par une unité (12) électronique de commande.
